# EUROPÄISCHE PATENTSCHRIFT

(11) **EP 1 066 496 B1**
(45) Veröffentlichungstag und Bekanntmachung des Hinweises auf die Patenterteilung: **14.08.2002**
(21) Anmeldenummer: 99907586.4
(22) Anmeldetag: 02.03.1999
(51) Int. Cl.: G01B 5/00, F16D 66/00, F16D 65/12

(54) **ERMITTLUNG EINES BAUTEILSPEZIFISCHEN PLANSCHLAG-ANTEILS**
DETERMINING A PROPORTION OF COMPONENT-SPECIFIC AXIAL RUNOUT
DETERMINATION D'UNE PROPORTION DE VOILAGE SPECIFIQUE D'UNE PIECE

(30) Priorität: 27.03.1998 DE 19813675
(43) Veröffentlichungstag der Anmeldung: 10.01.2001
(73) Patentinhaber: DaimlerChrysler AG, 70567 Stuttgart (DE)
(72) Erfinder: KUGEL, Uwe, D-71272 Renningen (DE); REICHELT, Helmut, D-73770 Denkendorf (DE); WILLENBRINK, Ludger, D-71686 Remseck (DE)
(86) Internationale Anmeldenummer: EP9901351
(87) Internationale Veröffentlichungsnummer: WO9950613

(56) Entgegenhaltungen:
- DE-A- 4 225 195
- GB-A- 2 159 276
- US-A- 5 562 193
- PATENT ABSTRACTS OF JAPAN vol. 014, no. 060 (M-0931), 5. Februar 1990 & JP 01 285453 A (HONDA MOTOR CO LTD), 16. November 1989 in der Anmeldung erwähnt

## Beschreibung

Die Erfindung betrifft ein Verfahren nach dem Oberbegriff des Anspruchs 1 sowie auf eine Bremsscheibe zur Durchführung dieses Verfahrens.

Rad-Bremsscheiben von Kraftfahrzeugen dürfen aufgrund der gesteigerten Komfortansprüche nur einen minimalen Planschlag haben; bei einem Durchmesser von 200 mm maximal etwa 40 µm.

Bei größeren Planschlägen der Bremsscheibe kommt es an den Umfangsstellen der größten Axialerhebung der Bremsscheibe beim Fahren zu einem sog. Streichelverschleiß der Bremsfläche. An diesen Umfangsstellen weist die Bremsscheibe dann eine im Vergleich zu den anderen Umfangsstellen veränderte Oberflächenbeschaffenheit, ein anderes Reibungsverhalten und eine geringfügige axiale Dickenabnahme auf. Dadurch kommt es beim Betätigen zum sog. Bremsrubbeln, d. h. zu einem umfangssynchronen, periodischen Schwanken der Bremswirkung.

In diesem Zusammenhang kommt es weniger auf den Planschlag des isolierten Einzelteils, als vielmehr auf den des Gesamt-Zusammenbaues aus Radlagern, Nabeninnenkontur, Nabenflansch und Bremsscheibe an. Jedes dieser Teile bzw. Konturen ist herstellungsbedingt für sich mit einer unvermeidbaren Form- und Meßungenauigkeit versehen, die sich beim Zusammenbau überlagern. Die Einzelungenauigkeiten streuen statistisch um einen Mittelwert. Die Formabweichungen sind vielfältig aus Oberflächen-Rauhigkeit, Bauteil-Welligkeit und Planschlag zusammengesetzt. Bei Zulassung eines gesamten Planschlages von x um am Zusammenbau des insgesamt aus n Teilen bestehenden Achskopfes mit Bremse darf theoretisch für jedes Einzelteil maximal ein Planschlag von x/n zugelassen werden. Es kommt hinzu, daß der maximal zulässige Planschlag der Bremsscheibe für deren Außenumfang gilt; beim Nabenflansch mit einem wesentlich kleineren Außendurchmesser muß ein gemäß dem Durchmesserverhältnis zum Bremsscheiben- zu Nabenflanschdurchmesser entsprechend kleinerer Planschlag vorgeschrieben werden.

Planschlag meint in diesem Zusammenhang eine axiale, sich periodisch bei einem einzigen Bauteilumlauf reproduzierende, sinoide Lageabweichung (einphasiger Planschlag). Das vorliegend bestehende Problem ist mehrschichtig zusammengesetzt:
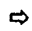 Zum einen überlagern die hier nicht interessierenden Maßund Formabweichungen wie Oberflächen-Rauhigkeit und Bauteil-Welligkeit bezüglich ihres tolerierbaren Ausmaßes den eigentlich interessierenden Planschlag bei weitem, so daß aus einem Tastaufschrieb die hier interessierende Größe meßtechnisch nicht isolierbar ist. Die tolerierbaren Oberflächen-Rauheiten und Bauteil-Welligkeiten sind in ihrem Ausmaß größer als der für ein Einzelteil tolerierbare Planschlag.
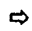 Die Teile verziehen sich beim Zusammenbau durch die Fügekraft in einem Ausmaß in mindestens der gleichen Größenordnung, wie der für jedes Bauteil bzw. Bauteilkontur maximal zulässige Einzelplanschlag, d. h. auch die montagebedingten Bauteilverzüge überlagern bei weitem den eigentlich interessierenden Planschlag.
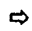 Sollte es tatsächlich - z. B: aufgrund bestimmter Filterbearbeitungen - möglich sein, aus einem stark von nicht interessierenden Signalen überlagerten Tastaufschrieb den hier interessierenden einphasigen Planschlag meßtechnisch zu isolieren, so läßt sich daraus dennoch nicht derjenige Anteil des Planschlages ermitteln, der auf die Radnabe zurückgeht.
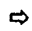 Es kommt bei der Vermeidung des Bremsrubbelns darauf an, daß der Planschlag der gesamten Baueinheit möglichst klein ist. Trotz Einhaltung entsprechend geringerer Planschläge an den Einzelteilen kann es vorkommen, daß sich beim Zusammenbau der Einzelteile ein Gesamtplanschlag ergibt, der höher als die Summe der Einzelplanschläge ist. Auch das Zusammenbauen der Einzelteile selber generiert also ebenfalls einen in seiner Auswirkung streuenden, weiteren Planschlaganteil.
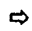 Um die Austauschbarkeit der Bremsscheibe, alleine - als Verschleißteil - gewährleisten zu können, darf nicht eine aus Radnabe und Bremsscheibe gebildete Baueinheit im Hinblick auf geringen Planschlag in zusammengebauten Zustand bearbeitet werden. Bei Einsatz der verschlissenen Bremsscheibe müßte dann auch die Radnabe erneuert werden, was vermieden werden soll.
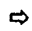 Um einer Problemlösung näher kommen zu können, müssen aus dem Gesamt-Planschlag, der nach dem Zusammenbauen der Einzelteile eintritt, sich Planschlag-Anteile bestimmen lassen, die eindeutig einem bestimmten Bauteil, z. B. der Radnabe zugeordnet werden können. Erst wenn der isolierte Planschlag-Anteil der Radnabe innerhalb der Zusammenbau-Einheit meßtechnisch bestimmbar ist, kann nach Wegen ge sucht werden, wie dieser Planschlag-Anteil fertigungs technisch reduziert werden kann.

Die Messung des Planschlags ist nicht neu und bspw. aus der GB 2 159 276 A bekannt. Diese Druckschrift befaßt sich aber lediglich mit der Vermessung einer Bremsscheibe, so daß die Exemplare ausgeschieden werden können, die außerhalb der Toleranzgrenzen liegen. Die Ermittlung eines von der Radnabe eines Fahrzeugrades herrührenden Planschlag-Anteils innerhalb eines mehrteiligen Gesamt-Zusammenbaus ist dort nicht vorgesehen.

Durch die JP 1-28 54 53 A ist es bekannt geworden, den Planschlag eines Scheibenrotors und eines Achszapfens einzeln zu messen und dann auf Grund der Messungen eine Drehausrichtung der beiden Elemente mit den günstigsten Werten vorzunehmen (sog. Matchen). Dies hat jedoch mit dem vorstehend angesprochenen Problem auch nichts zu tun.

Aus der DE 42 25 195 A1 ist ein Verfahren zur Messung von Rundund/oder Planlaufabweichungen eines Rotors bekannt, bei dem der mittels einer spielausgleichenden Spannaufnahme in einer Prüfmaschine aufgenommene Rotor gedreht wird, während der Drehung der Rotor durch berührende oder berührungslose Sensoren im Bereich seines Umfangs- und/oder Seitenflächen abgetastet wird und daraus ein Rund- und/oder Planlaufdiagramm erstellt wird, wobei zwei Rund- bzw. Planlaufdiagramme, welche in Bezug auf die Spannaufnahme um 180° gegeneinander verdreht werden, miteinander kombiniert werden und dabei aus der Spannaufnahme resultierende geometrische Messfehler in den beiden Diagrammen in dem durch die Kombination gewonnenen Rund- bzw. Planlaufdiagramm kompensiert wird.

Die Aufgabe der vorliegenden Erfindung liegt darin, ein Meßverfahren zur Ermittlung eines von der Radnabe eines Fahrzeugrads herrührenden Planschlag-Anteils innerhalb eines mehrteiligen Gesamt-Zusammenbaus bestehend aus Radlagern, Nabeninnenkontur, Nabenflansch und Bremsscheibe zu schaffen. Somit kann der Gesamt-Zusammenbau mittels eines bekannten Meßverfahrens vermessen werden und diese Messung soll dann den von der Radnabe herrührenden Planschlag-Anteil leicht bestimmen lassen. Dieses Meßverfahren ist im Kraftfahrzeugwesen praxisgerecht. Das erwähnte Bremsrubbeln stammt nämlich wie erläutert nicht von der Bremsscheibe allein, sondern vom Gesamt-Zusammenbau, weswegen es wenig Sinn macht, die Bremsscheibe isoliert zu vermessen und zu betrachten. Außerdem ist bei diesem Gesamt-Zusammenbau in aller Regel nur die Bremsscheibe das Verschleißteil, wenn man von der wesentlich längeren Lebensdauer der Radlager einmal absieht.

Zur Lösung dieser Aufgabe wird erfindungsgemäß vorgeschlagen, daß das zum Verfahren gemäß dem Oberbegriff des Anspruchs 1 durch die Gesamtheit der Merkmale des kennzeichnenden Teils dieses Anspruchs bestimmt ist.

Eine Weiterbildung des Verfahrens ergibt sich aus Anspruch 2.

Desweiteren wird die gestellte Aufgabe erfindungsgemäß durch die im Anspruch 3 definierte Bremsscheibe zur Durchführung des Verfahrens gelöst.

Ein ganz wesentlicher Punkt dieser Erfindung ist demnach die Herstellung und Verwendung einer Meister-Bremsscheibe, die zunächst anstelle der beim Fahrzeug tatsächlich verwendeten Bremsscheibe zu Meßzwecken an der Nabe befestigt wird. Man kennt dabei nicht nur alle ihre Werte, wie Oberflächenrauhigkeit, Welligkeit, Ebenheit und Planschlag über den gesamten Winkelbereich von 360° betrachtet, sondern darüberhinaus auch eine genaue Zuordnung der "Fehler", hinsichtlich ihrer Phasenlage an dieser Meister-Bremsscheibe. Wenn man mit dieser Meister-Bremsscheibe die interessierenden Meßwerte des Gesamt-Zusammenbaus ermittelt, so kann man von den ermittelten Werten bei richtiger Phasenzuordnung die bekannten Werte der Meister-Bremsscheibe abziehen und man erhält dann einen Differenzwert, der sich ausdrucken läßt und den Planschlag der Radnabe darstellt. Wichtig ist dabei die Ausbildung der Meister-Bremsscheibe insbesondere nach Anspruch 4, d. h. die Meister-Bremsscheibe darf nur deutlich kleinere Fehler aufweisen, als die zu messenden Werte des Nabenflansches bzw. die Toleranzwerte dieses Bauteils.

Die Vorteile des erfindungsgemäßen Verfahrens und der zugehörigen Meister-Bremsscheibe sind die einfachen Meßmittel, welche die Verwendung einer Planschlag-Meßmaschine und Meßtastschnitt-Einrichtung ermöglichen. Das verwendete Meßhilfsmittel, nämlich die Meister-Bremsscheibe ist wie die Zeichnung zeigt, in Anlehnung an die Bremsscheibe des Fahrzeugs ein sehr einfaches und somit auch recht genau herzustellendes Element. Es reichen einfache Meßvorschriften aus und das Meßergebnis ist meßtechnisch reproduzierbar. Schließlich erreicht man in der angestrebten Weise auch eine klare messtechnische Zuordnung des Ergebnisse zu einem isolierten Bauteil.

Die Zeichnung zeigt ein Ausführungsbeispiel der Erfindung.

Hierbei stellen dar:

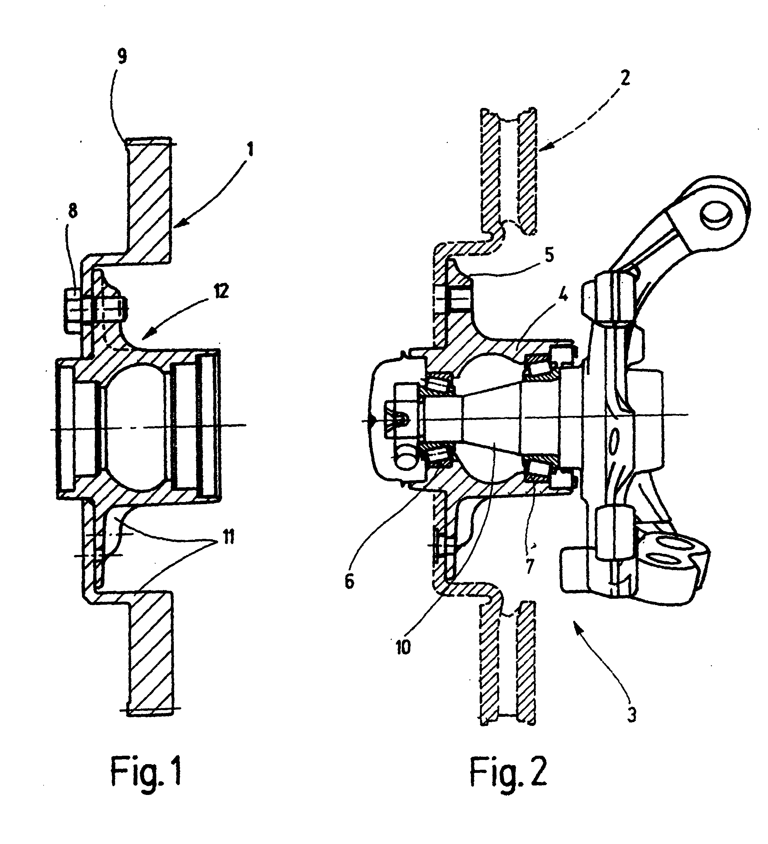

- Figur 1: einen Längsmittellschnitt durch eine Einheit aus Bremsnabe und Meister-Bremsscheibe,
- Figur 2: eine analoge Darstellung des Gesamt-Zusammenbaus, jedoch mit der tatsächlich verwendeten Bremsscheibe anstelle der Meister-Bremsscheibe.

Die Meister-Bremsscheibe 1 hat wie ein Vergleich der beiden Figuren zeigt, etwa die gleiche Größe und Form wie die Fahrzeug-Bremsscheibe 2. Sie ist auch mit den gleichen Bohrungen versehen, so daß sie in gleicher Weise wie die Fahrzeug-Bremsscheibe mit der Nabe bzw. dem Nabenflansch fest verbunden werden kann. Der Gesamt-Zusammenbau 3 besteht im wesentlichen aus der Nabeninnenkontur 4, dem Nabenflansch 5, den beiden Radlagern 6 und 7 sowie der erwähnten Fahrzeug-Bremsscheibe. Die übrigen Elemente, wie bspw. der Lagerzapfen sind hier von nebensächlicher Bedeutung.

Anstelle der Fahrzeug-Bremsscheibe 2 wird wie gesagt die Meister-Bremsscheibe 1 mit den Nabenflansch 5 fest verbunden und mit Hilfe von Schrauben 8 zusammengehalten, die denjenigen entsprechen, mit welchen beim Fahrzeug die Bremsscheibe 2 festgehalten wird. Die Schrauben 8 werden unter Anwendung definierter Anzugsmomente festgezogen.

Am Außenumfang der Meister-Bremsscheibe 1 ist eine in sich geschlossene, achssenkrecht ausgerichtete Meßtastfläche 9 angearbeitet. Außerdem ist in nicht gezeigter Weise ein Phasen-Nullpunkt auf einer dementsprechenden Linie an der Meister-Bremsscheibe vorhanden. Es handelt sich dabei um die im Kennzeichnungsmerkmal c) des Anspruchs 1 aufgeführte, genau festgelegte und hinsichtlich ihrer Meßwerte bekannte Umfangsstelle.

Die aus der Fahrzeugnabe 12 und der Meister-Bremsscheibe 1 bestehende Baueinheit 11 wird gemäß Kennzeichnungsmerkmal b) des Anspruchs 1 in eine Planschlag-Meßeinrichtung zentrisch eingesetzt, wo sie drehbar gelagert ist, so daß die Messung in Umfangsrichtung vorgenommen werden kann.

## Patentansprüche

1. Verfahren zur meßtechnischen Ermittlung eines von einer Radnabe eines Fahrzeugrades herrührenden Planschlag-Anteils innerhalb eines mehrteiligen, aus Radlagern,
Nabeninnenkontur, Nabenflansch und Bremsscheibe bestehenden Gesamt-Zusammenbaus, **gekennzeichnet durch** die Gesamtheit folgender Merkmale:
a) eine hinsichtlich ihres Planschlags und anderer für die Ermittlung relevanter meßbarer Werte bekannte Meister-Bremsscheibe (1) wird mit dem Flansch (5) der Radnabe (12) unter Aufwendung definierter Anzugsmomente zusammengeschraubt,
b) die aus der Meister-Bremsscheibe (1) und der zu vermessenden Radnabe (12) bestehende Baueinheit (11) wird in eine Planschlag-Meßeinrichtung zentrisch und drehbar aufgenommen,
c) die Messung wird an einer in sich geschlossenen, achssenkrecht ausgerichteten Meßtastfläche (9), deren Planschlag nach Ausmaß und Phasenlage bekannt ist, vorgenommen, wobei die Messung an einer bestimmten bekannten Umfangsstelle begonnen wird,
d) der ermittelte Gesamt-Planschlag der Baueinheit (11) wird nach Ausmaß und Phasenlage als Meßaufschrieb. festgehalten,
e) zur Bestimmung des isolierten Planschlags des Radnabenflansches (5) wird vom Meßaufschrieb zur Bildung eines Differenz-Aufschriebs des Planschlags, der nach Ausmaß und Phasenlage bekannte Planschlag der Meister-Bremsscheibe (1) bei gegenseitig richtiger Phasenzuordnung abgezogen.

2. Verfahren nach Anspruch 1, **dadurch gekennzeichnet, daß** die Messung des Planschlags nach der Tastschnittmethode durchgeführt wird.

3. Bremsscheibe zur Durchführung des Verfahrens nach Anspruch 1 oder 2, **gekennzeichnet durch** die Ausbildung der Bremsscheibe als Meister-Bremsscheibe,
- deren Außenkonturen zumindest angenähert formgleich zur Bremsscheibe (2) des Gesamt-Zusammenbaus (3) aus Radlagern (6,7), Nabeninnenkontur (4), Nabenflansch (5) und Fahrzeugbremsscheibe sind,
- die am Außenumfang eine in sich geschlossene, achssenkrecht ausgerichtete Meßtastfläche (9) aufweist, die bezüglich Oberflächenrauhigkeit, Welligkeit, Ebenheit und Planschlag deutlich kleinere Fehler aufweist als der zu messende Planschlag des Nabenflansches (5),
- und die eine dem Phasennullpunkt entsprechende linie aufweist so daß die Phasenlage die Planschlags meßtachnisch erfaßbar ist.

## Claims

1. Method for the determination by measurement of a lateral runout component due to a hub of a vehicle wheel within a multi-part assembly comprising wheel bearings, internal hub contour, hub flange and brake disk, **characterised by** the totality of the following features:
a) a master brake disk (1) with known lateral runout and other known quantifiable values relevant in this context is bolted to the flange (5) of the wheel hub (12) using specified tightening torques,
b) the unit (11) comprising the master brake disk (1) and the wheel hub (12) to be measured is centrally and rotatably located in a lateral runout measuring device,
c) measurements are taken at a continuous scanning surface (9) aligned at right angles to the axis, the degree and phasing of the lateral runout of which is known, measurements beginning at a defined known circumferential point,
d) the degree and phasing of the total measured lateral runout of the unit (11) are recorded,
e) to isolate the lateral runout of the wheel hub flange (5), the lateral runout of the master brake disk (1), with its known degree and phasing, is subtracted from the recorded value using mutually correct phasing to generate a differential record of lateral runout.

2. Method according to claim 1, **characterised in that** lateral runout is measured using the stylus tracer method.

3. Brake disk for the implementation of the method according to claim 1 or 2, **characterised by** designing the brake disk as a master brake disk,
- the external contours of which are at least approximately identical to those of the brake disk (2) of the assembly (3) comprising wheel bearings (6, 7), internal hub contour (4), hub flange (5) and vehicle brake disk,
- the external circumference of which is provided with a continuous scanning surface (9) aligned at right angles to the axis, and the faults of which, with regard to surface roughness, waviness, flatness and lateral runout are significantly less that the lateral runout of the hub flange (5) to be measured,
- and which is marked with a line corresponding to phase zero, thus enabling the phasing of lateral runout to be determined by measurement.

## Revendications

1. Procédé pour déterminer par une technique de mesure une proportion de déport par rapport à un plan provenant d'un moyeu d'une roue de véhiculé à l'intérieur d'une construction d'ensemble comportant plusieurs pièces, constituée de roulements de roue, de contour intérieur de moyeu, de flasque de moyeu et de disque de frein, **caractérisé par** l'ensemble des caractéristiques suivantes :
a) on visse avec le flasque (5) du moyeu (12), en employant des couples de serrage définis, un disque de frein - maître (1) dont on connaît le déport par rapport à un plan et d'autres valeurs mesurables pertinentes pour la détermination,
b) on reçoit, centré et avec liberté de rotation, dans un appareil de mesure du déport par rapport à un plan l'ensemble (11) constitué du disque de frein - maître (1) et du moyeu (12) à mesurer,
c) on procède à la mesure sur une surface de mesure à balayage (9) qui est fermée en soi, qui est orientée perpendiculairement à l'axe et dont on connaît la valeur et la position de phase du déport par rapport à un plan, la mesure débutant en un endroit périphérique connu déterminé,
d) on retient comme relevé de mesure, pour la valeur et la position de phase, le déport global par rapport à un plan ainsi établi, de l'ensemble (11),
e) pour déterminer le déport, par rapport à un plan isolé, du flasque de moyeu (5) on soustrait du relevé de mesure pour former un relevé de différence du déport par rapport à un plan, le déport par rapport à un plan, connu en valeur et en position de phase, du disque de frein - maître (1) en correspondance de phase exacte mutuelle.

2. Procédé selon la revendication 1, **caractérisé par le fait que** l'on procède à la mesure du déport par rapport à un plan selon le procédé de la coupe par balayage.

3. Disque de frein pour la mise en oeuvre du procédé selon la revendication 2, **caractérisé par** la conception du disque de frein comme disque de frein - maître,
- dont les contours extérieurs sont au moins approximativement de même forme que le disque de frein (2) de la construction (3) constituée des roulements de roue (6, 7), du contour intérieur de moyeu (4), du flasque de moyeu (5) et du disque de frein
- qui présente, à sa périphérie extérieure, une surface de mesure à balayage (9) qui est fermée en soi, qui est orientée perpendiculairement à l'axe, qui, en ce qui concerne la rugosité de surface, l'ondulation, la planéité et le déport par rapport à un plan, présente des défauts nettement moindres que le déport, par rapport à un plan. à mesurer du flasque de moyeu (5),
- et qui présente une ligne correspondant au point de phase nulle de sorte que la position de phase du déport par rapport à un plan peut être saisie par une technique de mesure.
